# EUROPÄISCHE PATENTSCHRIFT

(11) **EP 0 473 734 B1**
(45) Veröffentlichungstag und Bekanntmachung des Hinweises auf die Patenterteilung: **02.05.1997**
(21) Anmeldenummer: 91903892.7
(22) Anmeldetag: 21.02.1991
(51) Int. Cl.: B32B 27/12, E04F 15/18, D06N 7/00, D06N 3/12

(54) **FLEXIBLER SELBSTKLEBENDER FUSSBODENBELAG, INSBESONDERE FÜR FLUGZEUGE**
FLEXIBLE SELF-ADHESIVE FLOOR COVERING, ESPECIALLY FOR AIRCRAFT
REVETEMENT DE SOL FLEXIBLE ET AUTO-ADHESIF, PARTICULIEREMENT POUR LES AVIONS

(30) Priorität: 23.02.1990 DE 4005837
(43) Veröffentlichungstag der Anmeldung: 11.03.1992
(73) Patentinhaber: METZELER Automotive Profiles GmbH, D-88131 Lindau (DE)
(72) Erfinder: KRAL, Hans-Peter, D-6946 Gorxheimertal-Trösel (DE); KLESEN, Anton, D-6800 Mannheim 81 (DE); SCHRÖTER, Klaus, D-6140 Bensheim (DE)
(74) Vertreter: Preissner, Nicolaus, Dipl.-Ing.
(86) Internationale Anmeldenummer: EP9100321
(87) Internationale Veröffentlichungsnummer: WO9112962

(56) Entgegenhaltungen:
- EP-A- 0 111 465
- EP-A- 0 115 869
- EP-A- 0 150 385
- EP-A- 0 296 027
- EP-A- 0 307 694
- FR-A- 2 160 064
- US-A- 3 713 925
- US-A- 4 822 659

## Beschreibung

Die Erfindung bezieht sich auf ein Verfahren zur Herstellung eines flexiblen, selbstklebenden Fußbodenbelages, insbesondere für Flugzeuge, mit einer flexiblen Bahn aus einem flammwidrig eingestellten Polysiloxan sowie auf entsprechende selbstklebende Fußbodenbeläge.

Grundsätzlich ist ein derartiger Fußbodenbelag aus Polysiloxan aus der EP-B-0 115 869 bekannt. Dabei ist das Polysiloxan auf eine starre Schicht aus einem ausgehärteten, faserverstärkten Laminat auf Phenolharz-Basis aufvulkanisiert. Der Nachteil eines solchen Fußbodenbelages mit einer steifen Unterplatte besteht jedoch darin, daß der Belag sehr schwer und aufwendig ist und daß er insbesondere nicht in Raumecken verlegt und dort geknickt oder hochgebogen werden kann. Es ist daher schon versucht worden, einen flexiblen Fußbodenbelag zu schaffen, der selbstklebend ausgerüstet ist, indem auf die Polysiloxanbahn eine Folie aus Aluminium aufgeklebt wurde, wie das in der EP-A-0 307 694 beschrieben ist.

Bei der Verwendung einer derartigen Aluminiumfolie besteht jedoch die Gefahr, daß das Aluminium durch Einwirkung von Feuchtigkeit, insbesondere Wasser oder Waschmittel, korrodiert und damit eine Ablösung des Bodenbelages zu befürchten ist.

Der vorliegenden Erfindung liegt daher die Aufgabe zugrunde, einen flexiblen, selbstklebenden Fußbodenbelages anzugeben, mit dem ein dauerhafter, unverrottbarer Belag geschaffen werden kann, der darüber hinaus noch stark wärmedämmend ist und gewisse schalldämmende und trittnachgiebige Eigenschaften aufweist.

Zur Lösung dieser Aufgabe wird ein Fußbodenbelag auf die in den Ansprüchen 1 bis 4 angegebene Weise ausgebildet.

Als Material für das flexible Flächengebilde werden Phenol-Aldehyd-Fasern verwendet, da diese am besten die geforderten Eigenschaften aufweisen, nämlich daß sie im Brandfall selbst schwer entflammbar sind, keine toxischen Gase, wie z.B. Halogen, entwickeln und eine geringe Rauchgasdichte aufweisen. Als flexibles Flächengebilde kann dabei ein Gewebe oder eine Filzschicht verwendet werden.

Das flexible Flächengebilde kann unmittelbar bei der Vulkanisation der Polysiloxanbahn kontinuierlich mit dieser zusammengeführt, trocken verpreßt und anvulkanisiert werden.

Für die nachfolgende selbstklebende Ausrüstung ist es von besonderem Vorteil, wenn als selbstklebende Beschichtung ein in einem Lösungsmittel dispergierter Kleber naß auf die Unterseite des flexiblen Flächengebildes aufgebracht und anschließend ein Abdampfen des Lösungsmittels ermöglicht wird, da hierdurch ein festes Haften der Kleberschicht mit dem flexiblen Flächengebilde sichergestellt wird.

Als Kleber eignen sich besonders Acrylate oder Epoxy-Systeme.

Bei der Verwendung eines solchen flexiblen Flächengebildes ist es ferner von Vorteil, wenn in die Polysiloxanbahn ein feines Glasgewebe als Festigkeitsträger eingebettet wird.

Dabei kann bei der Vulkanisation der Polysiloxanbahn auf einer AUMA eine Bahn aus einem Glasgewebe zwischen zwei Bahnen aus unvulkanisiertem Polysiloxan zusammengefahren, verpreßt und ausvulkanisiert werden.

Zur zusätzlichen antistatischen Ausrüstung des Fußbodenbelages ist es zweckmäßig, wenn in die unvulkanisierte Polysiloxanmischung gemahlene Karbonfasern mit einer Länge von etwa 0,5 mm und in einem Anteil von 10 Gew.-% eingemischt werden. In gleicher Weise kann auch der Filz antistatisch ausgerüstet werden.

Das Phenol-Aldehyd-Gewebe kann ebenfalls mit Glasfasern verstärkt sein. Dabei können die Glasfasern als Kette und/oder Schuß miteingewebt oder die Glasfasern mit Gewebefäden umhüllt werden.

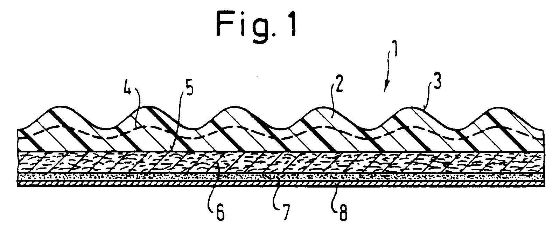

Anhand einer schematischen Zeichnung sollen Herstellungsverfahren und Aufbau von Ausführungsbeispielen nach der Erfindung näher erläutert werden. Dabei zeigt
- Fig. 1: einen Längsschnitt durch einen Fußbodenbelag mit unmittelbar an die Polysiloxanbahn anvulkanisiertem flexiblem Flächengebilde und

Wie man aus dem Längsschnitt nach Fig. 1 ersieht, weist der Fußbodenbelag 1 zunächst als obere Nutzschicht eine Schicht 2 aus einem flammwidrig eingestellten Polysiloxan auf, die beispielsweise mit einer gewellten Oberfläche 3 zur Verbesserung der Tritthaftung und zum leichteren Ablaufen von Flüssigkeit versehen ist. Das flammwidrige Polysiloxan besteht dabei zweckmäßigerweise aus einem Diorgano-Polysiloxan, feinverteilter Kieselsäure und/oder anderen Füllstoffen, feinzerteiltem Titandioxid, Platin, einem Härtungsmittel sowie einer Stickstoffverbindung. Die Vulkanisation des Polysiloxans erfolgt durch peroxidische Vernetzung.

Innerhalb dieser Polysiloxanschicht 2 kann als Festigkeitsträger ein feines Glasgewebe 4 eingebettet sein. Dieses Glasgewebe 4 kann zweckmäßigerweise dadurch in die Polysiloxanschicht 2 eingebracht werden, daß bei der Vulkanisation des Polysiloxans auf einer Rotationsvulkanisiermaschine (AUMA) eine solche Glasgewebebahn zwischen zwei dünnen Bahnen aus unvulkanisiertem Polysiloxan zusammengefahren, verpreßt und ausvulkanisiert wird.

Auf der glatten Unterseite 5 der Polysiloxanschicht 2 ist nunmehr ein flexibles Flächengebilde mit der Polysiloxanschicht 2 dauerhaft und unmittelbar verbunden. Dieses flexible Flächengebilde 6 soll aus einem schwer entflammbaren, nichttoxischen Material geringer Rauchgasdichte bestehen, um bei einem Brandfall neben einer praktischen Unbrennbarkeit auch bei großer Hitzeeinwirkung wenig schädigende Gase, wie z.B. Halogen, abzuspalten. Als besonders zweckmäßiges Material für dieses flexible Flächengebilde 6 haben sich Phenol-Aldehyd-Fasern erwiesen. Diese Fasern werden als Stapelfasern zu einem Filz entsprechender Dichte und Festigkeit verpreßt oder als Fäden zu einem Gewebe verarbeitet, um im vorliegenden Anwendungsfall eine dichte Unterschicht zu bilden.

Bei dem in Fig. 1 dargestellten Ausführungsbeispiel ist dieses flexible Flächengebilde 6 unmittelbar ohne Kleber mit der Polysiloxanschicht 2 verbunden. Dies geschieht dadurch, daß bei der Vulkanisation der Polysiloxanschicht 2 auf einer AUMA das flexible Flächengebilde 6 kontinuierlich mit dem noch unvulkanisierten Polysiloxan zusammengelaufen lassen wird, wodurch beim anfänglichen Verpressen kurze Faserenden des Filzes oder ein Teil der Gewebefäden in das noch weiche Polysiloxan eindringen und dort nach der Vulkanisation fest arretiert werden.

Dieses flexible Flächengebilde 6 dient im wesentlichen als Zwischenschicht für eine anschließende selbstklebende Beschichtung, da wegen der außerordentlich geringen Adhäsionseigenschaften einer glatten Polysiloxanoberfläche eine direkte Beschichtung des Polysiloxans nicht möglich ist. Darüber hinaus werden mit diesem flexiblen Flächengebilde zusätzlich eine Wärme- und eine Schalldämmung erreicht und die Flexibilität der eigentlichen Polysiloxanbahn beibehalten, so daß diese leichter auch auf gewölbten Flächen und in Ecken verlegt werden kann.

Eine derartige selbstklebende Beschichtung 7 ist nach Fig. 1 auf der Unterseite des flexiblen Flächengebildes 6 vorgesehen, die dann noch bis zum Verlegen mit einem Schutzpapier 8 abgedeckt sein kann. Diese selbstklebende Beschichtung besteht üblicherweise aus Acrylaten oder Epoxy-Systemen als Kleber. Um dabei eine feste Haftung dieser Kleberschicht 7 mit dem flexiblen Flächengebilde 6 zu bewerkstelligen, muß zunächst diese Kleberschicht 7 naß auf das flexible Flächengebilde 6 aufgebracht werden, um ein teilweises Eindringen in das flexible Flächengebilde und damit eine sichere Haftung zu bewirken. Dies wird dadurch erreicht, daß diese Kleber zunächst in einem Lösungsmittel gelöst und auf das flexible Flächengebilde 6 aufgesprüht werden, wobei dann nach Abdampfen des Lösungsmittels die eigentliche Kleberschicht fest an dem flexiblen Flächengebilde haftet.

Die vorstehend beschriebene Herstellung des Fußbodenbelages 1 durch Zusammenfahren der Polysiloxanbahn 2 und des flexiblen Flächengebildes 6 in einer AUMA kann somit kontinuierlich erfolgen, um damit längere und anschließend aufrollbare Bahnen zu erhalten.

Um darüber hinaus noch ein antistatisches Verhalten durch Herabsetzen des elektrischen Widerstandes zu erreichen, können dem Polysiloxan vor der Vulkanisation bei der Mischungsherstellung gemahlene Karbonfasern einer Länge von etwa 0,5 mm und einem Gewichtsanteil von etwa 10% beigemischt werden. Durch diese Beimengung von Karbonfasern ist es auch weiterhin möglich, die Polysiloxanbahn farbig einzufärben, ohne daß das Schwarz der Karbonfasern durchschlägt. Es ist zweckmäßig, den Filz dann auch in analoger Weise antistatisch auszurüsten.

Zur Verstärkung des fertigen Verbundes und insbesondere zur Erhöhung der Reißfestigkeit ist es aber auch möglich, zusätzlich oder anstatt einer Verstärkung der Polysiloxanschicht das Gewebe mit Glasfasern zu verstärken. Dies kann dadurch geschehen, daß die Glasfasern als Kette und/oder Schuß mit in das Gewebe eingewebt werden, oder daß die einzelnen Glasfasern mit den Gewebefäden umhüllt und dann verwebt werden. Damit ergibt sich ebenfalls ein hochreißfestes, flexibles Flächengebilde.

Das Gewicht eines so hergestellten flexiblen Fußbodenbelages kann 1.500 bis 2.200 g/m² betragen und läßt sich aufgrund der integrierten selbstklebenden Schicht sehr leicht verlegen und bietet dort einen dauerhaften, flammfesten Belag, der auch hohen Belastungen sicher standhält.

Ein weiterer Vorteil dieses in sich flexiblen Belages besteht darin, daß bei entsprechender Einstellung der selbstklebenden Beschichtung, mit der im allgemeinen eine Haftung auf einer den Flugzeugboden abdeckenden Phenolharz-Platte bewirkt wird, bei Schäden am Belag ein leichtes Auswechseln durch Ausschneiden der schadhaften Stelle, Abziehen von der Phenolharz-Platte und Einsetzen eines neuen Belagstückes möglich sind.

## Patentansprüche

1. Fußbodenbelag, insbesondere für Flugzeuge, mit einer flexiblen, flammwidrig eingestellten Polysiloxanbahn (2) und einem hiermit verbundenen flexiblen Flächengebilde (6) als Trägerbahn, das auf seiner Unterseite eine selbstklebende Beschichtung (7) aufweist, dadurch gekennzeichnet, daß das flexible Flächengebilde (6) aus Phenol-Aldehyd-Fasern besteht und in Form eines Gewebes oder eines Filzes vorliegt, dessen Faserenden oder Gewebefäden in die Polysiloxanbahn (2) eingepreßt sind und daß das flexible Flächengebilde (6) trocken an die Polysiloxanbahn (2) anvulkanisiert ist.

2. Selbstklebender Fußbodenbelag nach Anspruch 1, dadurch gekennzeichnet, daß das Gewebe mit Glasfasern verstärkt ist.

3. Selbstklebender Fußbodenbelag nach Anspruch 1, dadurch gekennzeichnet, daß in die Polysiloxanbahn (2) eine Glasgewebeschicht (4) als Festigkeitsträger eingebettet ist.

4. Selbstklebender Fußbodenbelag nach Anspruch 1, dadurch gekennzeichnet, daß die selbstklebende Beschichtung (7) mit einem abziehbaren Schutzpapier (8) abgedeckt ist.

## Claims

1. A floor covering, especially for aircraft, comprising a flexible, fire-retardant formulated web of polysiloxane (2) and a flexible sheeting (6) joined thereto as a backing web including on its underside a self-adhesive coating (7), characterized in that said flexible sheeting (6) consists of phenolic aldehyde and is present in the form of a fabric or felting, the fiber ends or fabric threads of which are pressed into said web of polysiloxane and in that said flexible sheeting (6) is vulcanized in place to said web of polysiloxane (2).

2. The self-adhesive floor covering as set forth in claim 1, characterized in that said fabric is reinforced with glass fibers.

3. The self-adhesive floor covering as set forth in claim 1, characterized in that in said web of polysiloxane (2) a glass fabric layer (4) is embedded as a strength backing.

4. The self-adhesive floor covering as set forth in claim 1, characterized in that in said self-adhesive coating (7) is covered by a peel-off type protective paper (8).

## Revendications

1. Revêtement de sol, en particulier pour avions, comprenant une nappe de poly-siloxane flexible et traitée de manière à résister aux flammes (2) et une texture de surface flexible (6) reliée à ladite nappe, en tant que nappe porteuse, qui présente sur sa face inférieure un revêtement autocollant (7), caractérisé en ce que la texture de surface flexible (6) est constituée de fibres de phénol-aldéhyde et se trouvent sous la forme d'un textile ou d'un feutre, dont les extrémités de fibres ou dont les fils textiles sont enfoncés par pressage dans la nappe de poly-siloxane (2), et en ce que la texture de surface flexible (6) est vulcanisée à sec sur la nappe de poly-siloxane (2).

2. Revêtement de sol autocollant selon la revendication 1, caractérisé en ce que le textile est renforcé avec des fibres de verre.

3. Revêtement de sol autocollant selon la revendication 1, caractérisé en ce qu'une couche de tissu de verte (4) est noyée dans la nappe de polysiloxane (2) en tant que support de renforcement.

4. Revêtement de sol autocollant selon la revendication 1, caractérisé en ce que le revêtement autocollant (7) est recouvert d'un papier de protection à enlever (8).
